# EUROPÄISCHE PATENTSCHRIFT

(11) **EP 1 477 223 B1**
(45) Veröffentlichungstag und Bekanntmachung des Hinweises auf die Patenterteilung: **25.07.2007**
(21) Anmeldenummer: 04003835.8
(22) Anmeldetag: 20.02.2004
(51) Int. Cl.: B01J 19/18, B01F 7/04, B01F 7/02, B01F 15/02, B01F 13/10

(54) **Grossvolumiger Reaktor mit mehreren Prozessräumen**
Large volume reactor with a plurality of process chambers
Reacteur de grand volume avec plusieurs chambres

(30) Priorität: 15.05.2003 CH 8642003
(43) Veröffentlichungstag der Anmeldung: 17.11.2004
(73) Patentinhaber: Buss-SMS-Canzler GmbH, 35510 Butzbach (DE)
(72) Erfinder: Peters, Hans, 79576 Weil (DE); Näf, Rainer, 8953 Dietikon (CH)
(74) Vertreter: Schaad, Balass, Menzl & Partner AG

(56) Entgegenhaltungen:
- US-A- 3 057 702
- US-A- 3 506 201
- US-A- 5 007 590
- PATENT ABSTRACTS OF JAPAN Bd. 009, Nr. 233 (C-304), 19. September 1985 (1985-09-19) & JP 60 090032 A (HITACHI SEISAKUSHO KK), 21. Mai 1985 (1985-05-21)

## Beschreibung

Die Erfindung bezieht sich auf einen grossvolumigen Reaktor gemäss dem Oberbegriff von Anspruch 1 und auf die Verwendung eines solchen Reaktors für die Entgasung von Stoffsystemen und für die Herstellung von Polymeren.

Grossvolumige Reaktoren werden insbesondere bei der Erzeugung und Verarbeitung von Kunststoff und speziell zum Mischen, Reagieren und Entgasen eingesetzt. Solche Reaktoren weisen üblicherweise einen Innenraum mit einem Mindestvolumen von etwa 3 bis 50'000 Liter und einem Normalvolumen von etwa 1'000 bis 20'000 Liter auf und gewährleisten über ein grosses Viskositätsspektrum eine gute Misch- und Knetwirkung und somit eine rasche Erneuerung der freien Oberfläche.

Ein solcher grossvolumiger Reaktor wird zum Beispiel in der EP-A-1101525 offenbart. EP-A-1101525 bezieht sich auf einen Reaktor mit zwei parallel zueinander angeordneten Wellen, die eine Anzahl von rotierenden Elementen tragen, welche möglichst nahe an die Innenwand des Gehäuses und an den Schaft der gegenüberliegenden Welle heranreichen und im gegenseitigen Eingriff zusammenwirken.

Weitere grossvolumige Reaktoren werden in EP-B-460466, EP-B-528210, EP-B-638354, EP-B-715881, EP-B-715882, EP-B-798093, EP-B-917941, EP-B-930141 und EP-A-1000657 beschrieben. Den bekannten grossvolumigen Reaktoren ist gemeinsam, dass sie über einen von einem Gehäuse umschlossenen Innenraum verfügen, und somit das im Reaktor zu verarbeitende Material unter demselben Druck steht.

US-A-3,506,201 offenbart einen Mischen, der durch querlaufende Abschirmungen in einzelne Mischkammern unterteilt ist. Patent Abstracts of Japan, Band 009, Nr. 233 & JP 60090032 offenbart eine Knetvorrichtung mit einer vertikal angeordneten Trennscheibe und eine vor dieser Trennscheibe angeordneten Überlaufscheibe.

Viele Verfahren wie etwa Konzentrierungs-, Entgasungs-, Trocknungs-, oder Polymerisationsverfahren sind aber massgeblich vom Druck im Verfahrensraum abhängig. Bei solchen Verfahren ist es vorteilhaft, den Druck der sich mit fortschreitender Prozessführung ändernden physikalischen und/oder chemischen Materialeigenschaften im Prozessraum anzupassen.

US-A-3,057,702 offenbart eine Vorrichtung zur Herstellung von Kondensationspolymeren. Gemäss einer Ausführungsform können in der dafür verwendeten Vorrichtung Trennwände angeordnet sein.

Beispielsweise ist es bei der Entgasung von Material vorteilhaft, die flüchtigen Komponenten (sogenannte Brüden) bei mehr als einem Druck zu entgasen, da beim Entgasen bei einem einzigen Druck die gesamte Menge an Brüden in einer Stufe anfallen würde, welche nur mittels aufwendiger Vakuumanlagen und Kondensationssysteme abgezogen und kondensiert werden könnte.

Zudem würde die mit der Entgasung bei einem einzigen Druck einhergehende hohe Entgasungsgeschwindigkeit dazu führen, dass beim Abscheiden der Brüden ein relativ hoher Anteil an Material mitgerissen würde und starke Schaumbildung im zu entgasenden Material auftreten könnte, was den Entgasungsprozess zusätzlich negativ beeinflussen würde und zu unerwünschten Ablagerungen am Brüdenaustritt führen könnte.

Für mit bekannten Reaktoren ausgeführte Verfahren wird das Einstellen mehrerer Drücke dadurch erreicht, dass mehrere von separaten Gehäusen umschlossene Prozessräume - d.h. mehrere kleinräumige und/oder grossräumige Reaktoren -, in welchem der jeweilige Druck vorliegt, nacheinander angeordnet und mittels Rohrleitungen miteinander verbunden werden.

EP-B-0768155 beschreibt ein Verfahren zur Herstellung eines Polymergranulats aus einer Polymerlösung in zwei individuellen Reaktoren, wobei die Polymerlösung in einem einen ersten Reaktor bildenden Verweilrohr oder Wärmetauscher unter einem Druck von 1 bis 15 bar auf eine gegebene Temperatur erhitzt wird, und die aufkonzentrierte Polymerlösung in einem als zweiter grossvolumiger Reaktor wirkenden Trockenapparat bei gegebener Temperatur und einem Druck von 1 mbar bis 5 bar weiter aufkonzentriert wird. Besagter Trockenapparat umfasst eine Materialzuführung am einen Ende des Gehäuses und einen Materialaustrag am anderen Ende des Gehäuses, wobei im Innenraum zwei Rotorwellen angeordnet sind, die das Material in Richtung von der Materialzuführung zum Materialaustrag fördern.

Solche Reaktorsysteme haben den Nachteil, dass aufgrund ihrer komplexen Konstruktion eine betriebssichere und produktschonende Leitung des Materials von einem Prozessraum zu einem weiteren nur schwierig zu bewerkstelligen ist. Dies ist insbesondere dann der Fall, wenn Material von hoher Viskosität gefördert wird, wenn hohe Temperaturen eingestellt werden müssen oder wenn kurze Verweilzeiten für die Überleitung angestrebt werden. Hinzu kommt, dass besagte Reaktorsysteme äusserst viel Raum beanspruchen, da jedem einzelnen Druck ein von einem separaten Gehäuse umschlossener Prozessraum zugeordnet ist. Solche Reaktorsysteme verursachen somit hohe Kosten bei der Anschaffung, der Installation und im Unterhalt.

Der vorliegenden Erfindung liegt die Aufgabe zugrunde, einen grossvolumigen Reaktor mit einem von einem Gehäuse umschlossenen Innenraum zur Verfügung zu stellen, in dem gleichzeitig unterschiedliche Drücke eingestellt werden können.

Diese Aufgabe wird mit einem grossvolumigen Reaktor gemäss Anspruch 1 gelöst. Weitere bevorzugte Ausführungsformen der Erfindung ergeben sich aus den abhängigen Ansprüchen.

Erfindungsgemäss trennt im Innenraum eine Trennwand zwei Prozessräume, die je einem Druck zugeordnet sind, voneinander ab. Weitere Trennwände, die weitere Prozessräume und somit Drücke voneinander abtrennen, können vorliegen. Mittels einer im Innenraum angebrachten, um ihre Achse drehend angetriebenen Rotorwelle wird das zu behandelnde Material in Richtung von einer Materialzuführung am einen Ende des Gehäuses zu einem Materialaustrag am anderen Ende des Gehäuses gefördert. Die Leitung des zu behandelnden Materials vom ersten Prozessraum in den zweiten Prozessraum erfolgt durch ein der Trennwand zugeordnetes Stausystem, welches einen Stausystemkanal umfasst, der von einer in den ersten Prozessraum mündenden Eintrittsöffnung zu einer in den zweiten Prozessraum mündenden Austrittsöffnung führt. Bei der Durchführung eines Prozesses im erfindungsgemässen grossvolumigen Reaktor wird der Produktfüllgrad im ersten Prozessraum derart gewählt, dass im stationären Betrieb der gesamte freie Querschnitt der Eintrittsöffnung mit Material abgedeckt wird, womit eine wirksame Sperre zwischen den beiden Prozessräumen erzielt wird. Dabei wird das Material durch den Stausystemkanal vom ersten in den zweiten Prozessraum geleitet und gleichzeitig der Durchtritt von Gas verhindert. Dies erlaubt, dass im Innenraum des grossvolumigen Reaktors gleichzeitig unterschiedliche Drücke eingestellt werden können.

Ein erfindungsgemässer grossvolumiger Reaktor beansprucht sehr wenig Raum. Seine Konstruktion gewährleistet, dass das zu behandelnde Material auf einfache Art und Weise betriebssicher von einem ersten Prozessraum in einen zweiten Prozessraum geleitet werden kann. Diese Vorteile haben zur Folge, dass ein erfindungsgemässer grossvolumiger Reaktor kostengünstig hergestellt und unterhalten werden kann.

In einer bevorzugten Ausführungsform umfasst das Stausystem einen Aktivförderer zur Förderung des Materials durch den Stausystemkanal. Dadurch kann das Material in kontrollierter Weise kontinuierlich von der Eintrittsöffnung zu der Austragsöffnung des Stausystemkanals gefördert werden.

In einer weiteren bevorzugten Ausführungsform ist der Aktivförderer ein Schneckenförderer, besonders bevorzugt ein dichtkämmender Doppelschneckenförderer. In einer solchen Ausführungsform kann eine axiale Rückvermischung zwischen zwei aufeinanderfolgenden Prozessräumen nahezu vollständig verhindert werden. Dies ist beispielsweise dann vorteilhaft, wenn eine im Stausystem oder im zweiten Prozessraum hinzugefügte zusätzliche Komponente, wie etwa ein Katalysator, ein Stopper, ein Neutralisator, ein Regler oder ein Additiv nicht mit der Zusammensetzung des Materials im ersten Prozessraum in Kontakt treten soll.

In einer weiteren bevorzugten Ausführungsform ist der Aktivförderer drehzahlvariabel angetrieben. Damit können während des Betriebs die mittleren Materialfüllgrade und Materialverweilzeiten in den Prozessräumen variiert und an die optimalen Prozessbedingungen angepasst werden.

In einer weiteren bevorzugten Ausführungsform ist das Stausystem im Inneren der Trennwand angeordnet, wobei der Stausystemkanal in einer wenigstens annähernd rechtwinklig zur Längsachse der Rotorwelle stehenden Ebene liegt und die Eintrittsöffnung benachbart zum Boden des ersten Prozessraumes und die Austrittsöffnung bezüglich der Eintrittsöffnung höher liegend angeordnet ist. Dies erlaubt eine einfache und platzsparende Konstruktion des Stausystems, wobei zusätzlich gewährleistet wird, dass auch bei geringeren Materialfüllgraden im ersten Prozessraum der freie Querschnitt der Eintrittsöffnung während des Betriebs permanent mit Material abgedeckt und derart der Durchtritt von Gas verhindert ist.

In einer weiteren bevorzugten Ausführungsform durchgreift die Rotorwelle die Trennwand, ist an dieser dichtend gelagert und in den zwei Prozessräumen wirksam. Damit wird erreicht, dass die Rotorwelle mittels eines einziges Antriebssystems ihre Wirkung sowohl im ersten als auch im zweiten Prozessraum entfaltet. Zusätzlich sind in einer weiteren bevorzugten Ausführungsform in wenigstens einem der zwei Prozessräume zwei parallele Rotorwellen angeordnet. Diese drehen gleich- oder gegensinnig und weisen Scheibenelemente auf, die im gegenseitigen Eingriff zusammenwirken. Dadurch lässt sich eine ähnliche Mischund Knetwirkung wie in EP-A-1101525 beschrieben auch in wenigstens einem Prozessraum des erfindungsgemässen grossvolumigen Reaktors erzielen. In einer weiteren bevorzugten Ausführungsform durchgreifen zwei parallele Rotorwellen die Trennwand, sind an dieser dichtend gelagert und in den zwei Prozessräumen wirksam, womit die besagte Misch- und Knetwirkung in beiden Prozessräumen mit Hilfe eines einzigen Antriebssystem erreicht werden kann.

In einer weiteren bevorzugten Ausführungsform ist eine erste Rotorwelle im ersten Prozessraum angeordnet und an der Trennwand gelagert und eine zweite Rotorwelle im zweiten Prozessraum angeordnet und an der Trennwand gelagert. Eine solche Ausführungsform ist insbesondere dann vorteilhaft, wenn in den beiden Prozessräumen die Rotorwellen mit unterschiedlicher Drehzahl angetrieben werden sollen. Besonders bevorzugt sind dabei mindestens in einem Prozessraum zwei parallele Rotorwellen angeordnet und an der Trennwand gelagert, was erlaubt, dass in diesem Prozessraum eine Misch- und Knetwirkung wie oben beschrieben erzielt werden kann.

Ist das Stausystem wie in einer weiteren bevorzugten Ausführungsform beheizt, so kann die Temperatur im Stausystem optimal den Prozessbedingungen angepasst werden.

Führt wie in einer weiteren bevorzugten Ausführungsform ein Teilstromkanal zur Entnahme von Material vom Stausystemkanal weg, so gestattet dies die sonst nur schwierig zu bewerkstelligende totraumfreie und sichere Entnahme von Proben aus der stromaufwärts liegenden Prozessstufe. Dies ist oft eine wichtige Voraussetzung für das Einstellen der optimalen Prozessbedingungen in den einzelnen Prozessräumen. Die Probe kann periodisch oder kontinuierlich über ein Mess- oder Analysegerät gefördert werden, in dem beispielsweise die Viskosität, die Farbe oder der Infrarot-Restgehalt bestimmt wird, und anschliessend in den grossvolumigen Reaktor zurückgeleitet oder entsorgt werden. Diese Ausführungsform ist vor allem dann vorteilhaft, wenn die Anfahrvorgänge komplex sind oder wenn das Anfahrmaterial nicht durch den gesamten grossvolumigen Reaktor gefördert werden soll.

In einer weiteren bevorzugten Ausführungsform führt ein Zuführkanal zum Zuführen eines Stoffes in den Stausystemkanal. Dies erlaubt, dass Komponenten, die im gesamten zweiten Prozessraum vorliegen, nicht aber mit der Materialzusammensetzung im ersten Prozessraum in Kontakt kommen sollen, gezielt in den grossvolumigen Reaktor zugeführt werden können.

In einer weiteren bevorzugten Ausführungsform ist der Trennwand ein Brüdenaustragssystem mit einem Brüdenkanal zugeordnet, wobei der Brüdenkanal eine in den ersten Prozessraum mündende Brüdeneintrittsöffnung in der Trennwand und eine mit dem Brüdenkondensationssystem verbundene Brüdenaustrittsöffnung umfasst, und der Brüdenkanal dazu bestimmt ist, Brüden vom ersten Prozessraum dem Brüdenkondensationssystem zuzuleiten. Dies hat den Vorteil, dass bei Entgasungen die flüchtigen Komponenten mittels Rückwärtsentgasung abgezogen werden können. Mitgerissenes Material kann dabei mittels eines Aktivförderers im Brüdenkanal in den ersten Prozessraum zurückgeführt werden.

In einer weiteren bevorzugten Ausführungsform weist der erste Prozessraum ein grösseres Volumen auf als der zweite Prozessraum. Dies ist insbesondere bei einer Flash-Entgasung oder beim Aufkonzentrieren von Material mit einem hohen anfänglichen Gehalt an Lösungsmittel von Vorteil, da die Ausführungsform erlaubt, dass grössere Brüdenmengen bei reduziertem Strömungsdruckverlust und vermindertem Brüdenmitriss abgezogen werden können.

In einer weiteren Ausführungsform weist wenigstens ein Prozessraum in der Mantelwand des Gehäuses eine Brüdeneintrittsöffnung auf. Bei Entgasungen können somit Brüden aus diesem Prozessraum abgezogen werden, wobei ein Brüdenkondensationssystem ausgewählt werden kann, welches optimal auf die jeweilige Brüdenmenge und die Brüdenzusammensetzung angepasst ist.

In einer weiteren bevorzugten Ausführungsform ist die Oberfläche der Trennwand plan ausgebildet und senkrecht zur Achse der Rotorwelle angeordnet. Die Rotorwelle weist ein mit der Trennwand zur Abreinigung zusammenwirkendes Reinigungselement auf, das mit der Trennwand zusammenwirkt. Dies ermöglicht, dass die Trennwände nahezu vollständig von der Rotorwelle abgereinigt werden können.

Ein erfindungsgemässer Reaktor kann für thermische und/oder physikalische und/oder chemische Behandlungen von Stoffsystemen verwendet werden. Unter thermischer Behandlung wird insbesondere das Verdampfen, Entgasen und Trocknen eines Stoffsystemes verstanden. Der Begriff der physikalischen Behandlung umfasst insbesondere die Stoffumwandlung, die Sublimation, die Resublimation, die Kristallisation oder das Mischen eines Stoffsystemes, während der Begriff der chemischen Behandlung Reaktionen im allgemeinen umfasst.

Ein erfindungsgemässer grossvolumiger Reaktoren wird bevorzugt für die Entgasung von Stoffsystemen und für die Herstellung und für das Compounding von Polymeren verwendet.

Beispielsweise kann mit einem einzigen erfindungsgemässen grossvolumigen Reaktor ein Verfahren, wie es in US-B-6,066,708 beschrieben wird, durchgeführt werden.

Erfindungsgemässe grossvolumige Reaktoren werden mittels der nachfolgend beschriebenen Zeichnungen im Detail erläutert. Es zeigen rein schematisch:
- Fig. 1: die zum Stand der Technik gehörende Anordnung eines Reaktorsystems mit drei von separaten Gehäusen umschlossenen Reaktoren mit eigenem Druck;
- Fig. 2: einen erfindungsgemässen grossvolumigen Reaktor mit einem von einem Gehäuse umschlossenen Innenraum mit drei Prozessräumen, in denen unterschiedliche Drücke vorliegen;
- Fig. 3: einen erfindungsgemässen grossvolumigen Reaktor mit einem von einem Gehäuse umschlossenen Innenraum mit mehreren, Material enthaltenden Prozessräumen, in denen unterschiedliche Volumina, Füllgrade, mittlere Verweilzeiten, Temperaturen und Drücke vorliegen;
- Fig. 4: einen vertikalen Längsschnitt durch einen Teil eines erfindungsgemässen grossvolumigen Reaktors;
- Fig. 5: einen horizontalen Längsschnitt durch den in Fig. 4 gezeigten Teil des grossvolumigen Reaktors;
- Fig. 6: einen Radialschnitt durch die Trennwand eines erfindungsgemässen grossvolumigen Reaktors mit dem Stausystem und zwei Durchführungen, durch welche zwei Rotorwellen die Trennwand durchgreifen und an dieser gelagert sind;
- Fig. 7: einen Teil des grossvolumigen Reaktors im Längsschnitt entlang der Linie A-A' in Fig. 6 mit einer zusätzlich dargestellten Antriebsvorrichtung in Seitenansicht;
- Fig. 8: einen Teil des grossvolumigen Reaktors im Längsschnitt entlang der Linie B-B' in Fig. 6 mit einer Rotorwellenlagerung und einer Abdichtung;
- Fig. 9: einen Radialschnitt durch die Trennwand eines erfindungsgemässen grossvolumigen Reaktors ähnlich Fig. 6 und zusätzlich einem der Trennwand zugeordneten Teil eines Brüdenaustragssystems;
- Fig. 10: einen Teil eines grossvolumigen Reaktors ähnlich Fig. 8 im Längsschnitt mit zusätzlich einem dem ersten Prozessraum zugeordneten Brüdenaustragssystem;
- Fig. 11: ein grossvolumiger Reaktor mit zwei die Trennwand durchgreifenden parallelen Rotorwellen und zusätzlich zwei je einem der Prozessräume zugeordneten Brüdenaustragssystemen mit je zwei Brüdenaustrittsöffnungen in der Mantelwand des Gehäuses;
- Fig. 12: ein grossvolumiger Reaktor mit einem Materialaustragssystem und zusätzlich zwei Brüdenaustragssystemen, wobei eines dem ersten Prozessraum und eines dem Materialaustragssystem zugeordnet ist;
- Fig. 13: ein grossvolumiger Reaktor mit einem Materialaustragssystem ähnlich Fig. 12 und zusätzlich zwei Brüdenaustragssystemen, wobei eines dem Stausystem und eines dem Materialaustragssystem zugeordnet ist;
- Fig. 14: ein grossvolumiger Reaktor mit einem ersten Prozessraum, welcher ein grösseres Volumen aufweist als der zweite Prozessraum, und zusätzlich einem Brüdenaustragssystem ähnlich Fig. 11 und einer Vorwärmeanordnung;
- Fig. 15: ein grossvolumiger Reaktor mit zusätzlich einem Brüdenaustragssystem ähnlich Fig. 11 und einem Zuführkanal zum Stausystemkanal;
- Fig. 16: ein grossvolumiger Reaktor mit zwei parallelen, im ersten Prozessraum angeordneten Rotorwellen, zwei weiteren parallelen, im zweiten Prozessraum angeordneten Rotorwellen und zusätzlich einem Brüdenaustragssystem ähnlich Fig. 11;
- Fig. 17: ein grossvolumiger Reaktor mit einem Materialaustragssystem, zusätzlich einem zum Materialaustragskanal führenden Zuführkanal, zwei vom Materialaustragskanal wegführenden Entgasungskanälen und zwei Brüdenaustragssystemen ähnlich Fig. 11;
- Fig. 18: ein grossvolumiger Reaktor mit zusätzlich zwei Brüdenaustragssystemen ähnlich Fig. 11 und einem Pulveraustrag;
- Fig. 19: ein grossvolumiger Reaktor mit zusätzlich zwei Brüdenaustragssystemen ähnlich Fig. 11 und einem Zuführkanal zum Stausystemkanal zum Zuführen des Kondensats aus einem dem zweiten Prozessraum zugeordneten Brüdenkondensationssystem;
- Fig. 20: ein grossvolumiger Reaktor mit drei Prozessräumen und zusätzlich drei Brüdenaustragssystemen zur Konzentrierung und Restentgasung einer Polymerlösung;
- Fig. 21: ein grossvolumiger Reaktor mit zusätzlich zwei Brüdenaustragssystemen ähnlich Fig. 11 und einem vom Stausystemkanal wegführenden Teilstromkanal zur Probeentnahme und Rückführung in den zweiten Prozessraum;
- Fig. 22: ein grossvolumiger Reaktor mit zusätzlich zwei Brüdenaustragssystemen ähnlich Fig. 11 und einem Ventil zur Entnahme von Material aus dem Stausystemkanal, welches entsorgt oder in den ersten Prozessraum zurückgeführt wird; und
- Fig. 23: in perspektivischer Ansicht eine Rotorwelle, deren Endbereiche eine Ausgestaltung aufweisen, die sich von jener des mittleren Bereiches unterscheidet.

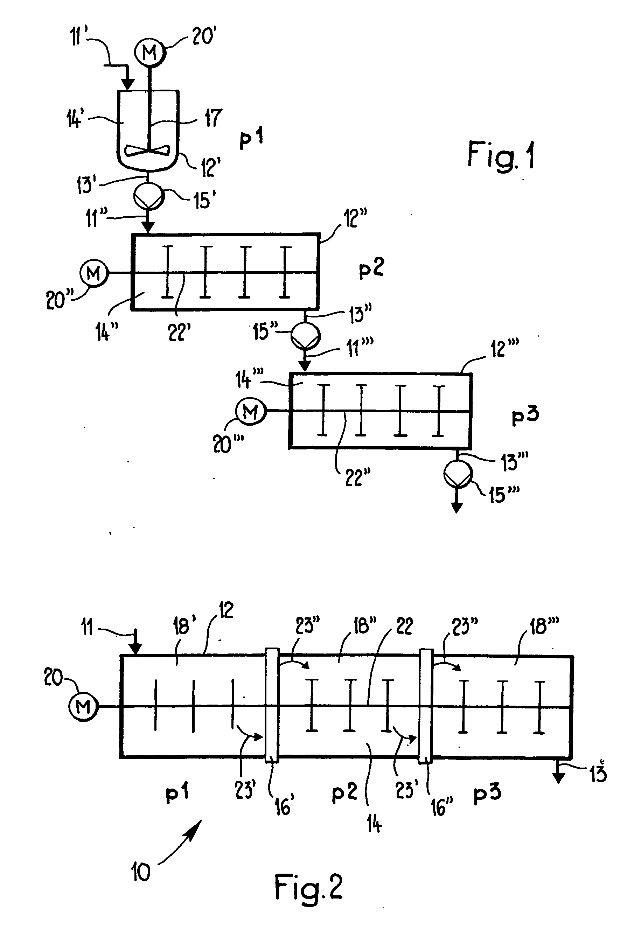

Fig. 1 zeigt eine zum Stand der Technik gehörende, in EP-B-768155 offenbarte Anordnung eines Reaktorsystems mit drei von separaten Gehäusen 12', 12", 12''' umschlossenen je einen Prozessraum bildenden Innenräumen 14', 14", 14"' mit eigenem Druck p1, p2, p3. Jeder Innenraum 14', 14", 14"' verfügt über eine Materialzuführung 11', 11", 11"' und einen Materialaustrag 13', 13", 13"'. Mittels Pumpen 15', 15", 15''' wird des Material vom ersten Innenraum 14' in den zweiten Innenraum 14" beziehungsweise vom zweiten Innenraum 14" in den dritten Innenraum 14''' und vom dritten Innenraum 14''' nach aussen gefördert. Die den Innenräumen 14', 14", 14"' zugeordneten Drücke werden mittels der jeweiligen Verbindungsleitungen mit den in diesen angeordneten Pumpe 15', 15" abgetrennt.

Im ersten Innenraum 14' ist ein von einem eigenen Antriebssystem 20' angetriebener Rührer 17 angeordnet. Im zweiten und im dritten Innenraum ist je eine von einem eigenen Antriebssystem 20", 20"' angetriebene Rotorwelle 22', 22" horizontalachsig angeordnet, welche dazu bestimmt ist, das Material von der jeweiligen Materialzuführung 11", 11''' zum jeweiligen Materialaustrag 13", 13''' zu fördern.

Im Gegensatz dazu weist der in Fig. 2 gezeigte erfindungsgemässe grossvolumige Reaktor 10 einen von einem einzigen Gehäuse 12 umschlossenen Innenraum 14 auf, in dem zwei Trennwände 16', 16" insgesamt drei Prozessräume 18', 18", 18''' mit eigenem Druck p1, p2, p3 voneinander abtrennen. Der grossvolumige Reaktor 10 verfügt am einen Ende über eine Materialzuführung 11 und am anderen Ende über einen Materialaustrag 13. Im Innenraum 14 ist eine von einem Antriebssystem 20 angetriebene Rotorwelle 22 horizontalachsig angeordnet, die die Trennwände 16', 16" durchgreift und die das zu behandelnde Material in Richtung von der Materialzuführung 11 zum Materialaustrag 13 durch den ganzen Innenraum 14 hindurch fördert. Den Trennwänden 16', 16" ist je ein der Übersichtlichkeit halber nicht gezeigtes, jedoch mit Pfeilen 23', 23" angedeutetes Stausystem mit einem Stausystemkanal zugeordnet. Die Pfeile 23', 23" deuten an, dass das Material über eine benachbart zum Boden des ersten Prozessraumes 18' bzw. zweiten Prozessraumes 18" angeordnete Eintrittsöffnung in den Stausystemkanal und von diesem nach oben und über eine bezüglich der Eintrittsöffnung höher liegende Austrittsöffnung in den zweiten Prozessraum 18" bzw. dritten Prozessraum 18''' gelangt.

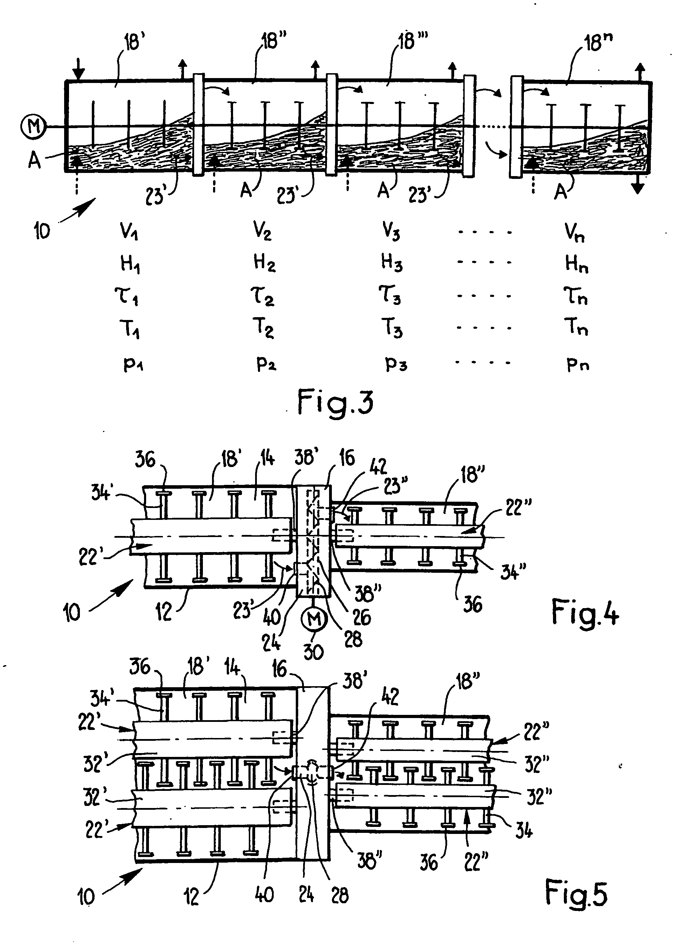

Fig. 3 zeigt in analoger Weise einen grossvolumigen Reaktor 10 mit n Prozessräumen 18', 18", 18"', ... mit unterschiedlichen Volumina (V), Füllgraden (H), mittleren Verweilzeiten (τ), Temperaturen (T) und Drücken (p), wobei die die jeweiligen Prozessräume miteinander verbindenden Stausysteme der Übersichtlichkeit halber nicht gezeigt sind. Schematisch ist angedeutet, dass das zu behandelnde Material A in den einzelnen Prozessräumen 18', 18", 18''' während der Prozessführung die mit Pfeil 23' angedeuteten Eintrittsöffnungen der Stausystemkanäle abdeckt.

Fig. 4 zeigt einen vertikalen Längsschnitt und Fig. 5 einen horizontalen Längsschnitt durch einen Teil eines erfindungsgemässen grossvolumigen Reaktors 10. Das teilweise dargestellte Gehäuse 12 umfasst einen Innenraum 14, in dem mittels einer Trennwand 16 ein erster und ein zweiter Prozessraum 18', 18" abgetrennt wird. Die Querschnittsfläche des ersten Prozessraumes 18' ist grösser als jene des zweiten Prozessraumes 18".

Wie insbesondere aus Fig. 4 ersichtlich ist, ist in der Trennwand 16 ein Stausystem 24 mit einem in vertikaler Richtung verlaufenden Stausystemkanal 26 angeordnet. Vom unteren Bereich des ersten Prozessraumes 18' führt horizontal eine Eintrittsöffnung 40 der Trennwand 16 in den Stausystemkanal 26. Aus dem Stausystemkanal 26 führt horizontal eine Austrittsöffnung 42 der Trennwand 16 in den oberen Bereich des zweiten Prozessraumes 18". Im Stausystemkanal 26 ist ein dichtkämmender Doppelschneckenförderer 28 angeordnet, der von einem unter dem Gehäuse 12 angeordneten Doppelschneckenförderer-Antriebssystem 30 angetrieben wird und - wie mit Pfeilen 23', 23" angedeutet - das Material aus dem ersten Prozessraum 18' in den zweiten Prozessraum 18" fördert.

Mittels des Doppelschneckenförderer-Antriebssystems 30 werden die Schneckenwellen gegensinnig oder gleichsinnig zueinander drehend angetrieben.

Wie aus Fig. 5 ersichtlich ist, sind im ersten und im zweiten Prozessraum 18', 18" je zwei parallele Rotorwellen 22', 22" horizontalachsig angeordnet, die an der Trennwand gelagert sind. Die Rotorwellen 22', 22" umfassen einen Schaft 32', 32" mit daran angeordneten Scheibenelementen 34', 34", die möglichst nahe an die Wand des Gehäuses 12 und an den Schaft 32', 32" der gegenüberliegenden Rotorwelle 22', 22" heranreichen und im gegenseitigen Eingriff zueinander zusammenwirken. Am freien Ende der Scheibenelemente 34', 34" sind im wesentlichen parallel zur Wand des Gehäuses ausgerichtete Abreinigungselemente 36 angebracht, welche möglichst nahe an die Wand des Gehäuses 12 heranreichen und bewirken, dass diese während des Betriebes fortlaufend abgereinigt wird. Es ist denkbar, dass bei allen erfindungsgemässen grossvolumigen Reaktoren anstelle von Scheibenelementen andere Elemente wie Haken, Barren, Schaufeln usw. an den Rotorwellen angeordnet sind.

Weiter können die Rotorwellen 22', 22" der Übersichtlichkeit halber nicht gezeigte Reinigungselemente zur Abreinigung der plan ausgebildeten Oberfläche der Trennwand 16 aufweisen, die möglichst nahe an die Trennwand 16 heranreichen. Der Abstand zwischen den Rotorwellen 22' im ersten Prozessraum 18' ist grösser als jener der Rotorwellen 22" im zweiten Prozessraum 18". Ebenso ist der Abstand zwischen dem Schaft 32' und den freien Enden der Scheibenelemente 34' sowie der Schaftdurchmesser der Rotorwellen 22' im ersten Prozessraum 18' grösser als an jener der Rotorwellen 22" im zweiten Prozessraum 18". Die Rotorwellen 22', 22" sind je mittels eines zylinderförmigen Lagerzapfens 38', 38" an der Trennwand 16 gelagert. Die Rotorwellen 22' im ersten Prozessraum 18' und die Rotorwellen 22" im zweiten Prozessraum 18" werden von je einem der Übersichtlichkeit halber nicht gezeigten Antriebssystem separat angetrieben.

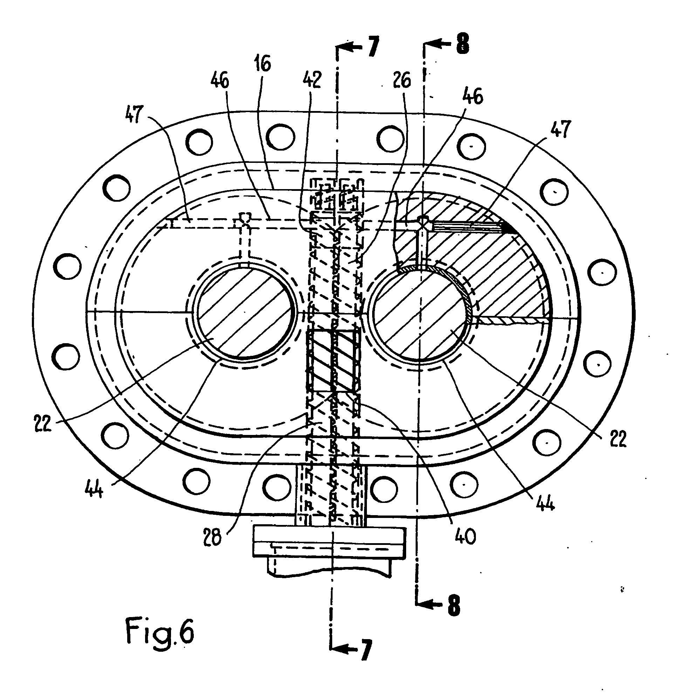

In Fig. 6, 7 und 8 ist eine Ausführungsform dargestellt, in der parallele, in beiden Prozessräumen 18', 18" wirksame Rotorwellen 22 die Trennwand 16 durchgreifen.

Wie insbesondere aus Fig. 6 ersichtlich ist, ist die Fläche der Eintrittsöffnung 40 der Trennwand 16 in dieser Ausführungsform grösser als jene der Austrittsöffnung 42 der Trennwand 16. Auf der Höhe der Austrittsöffnung 42 führen in der Trennwand 16 zwei Rückführungskanäle 46 vom Stausystemkanal 26 weg. Die Rückführungskanäle 46 weisen je einen horizontalen und einen vertikalen Abschnitt auf und verbinden den Stausystemkanal 26 mit je einer der zwei in der Trennwand 16 angebrachten Lageranordnungen mit Durchführungen 44 für die Rotorwellen 22. Material, welches mittels des Doppelschneckenförderers 28 durch den Stausystemkanal 26 gefördert wird, gelangt somit über die Rückführungskanäle 46 zu den Durchführungen 44, die dadurch mit Material abgedichtet werden. Aus herstellungstechnischen Gründen wird die Horizontalbohrung der Rückführungskanäle 46 bis nach aussen ausgeführt und mit einem Einsatz 47 abgedichtet.

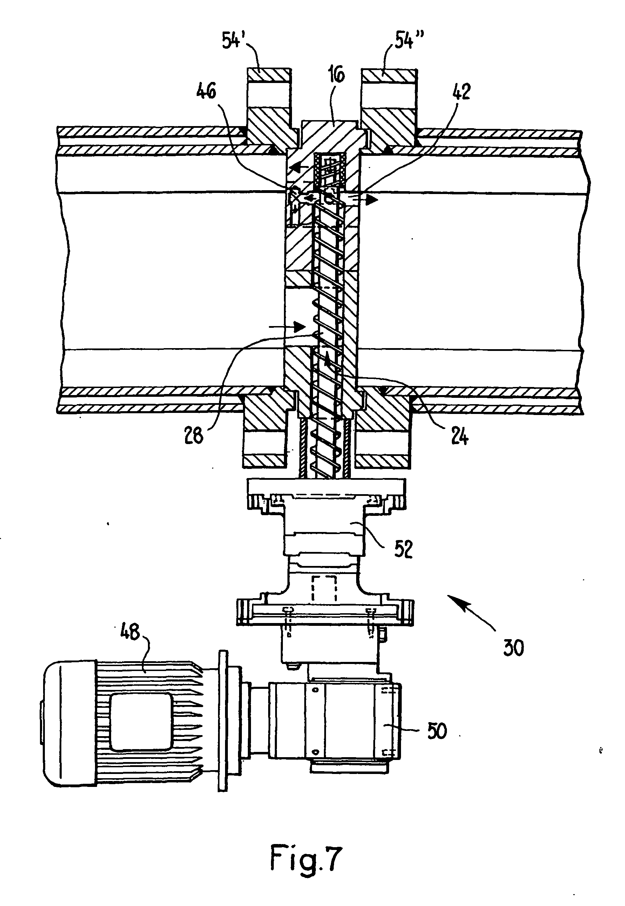

Wie aus Fig. 7 ersichtlich ist, umfasst das Antriebssystem 30 des Doppelschneckenförderers 28 des Stausystems 26 einen Elektromotor 48, ein Getriebe 50 und eine Schneckenwellenabdichtung 52. Die Trennwand 16, der das Stausystem 24 zugeordnet ist, ist zwischen zwei durch Spannschrauben miteinander verspannten Ringflanschen 54', 54" der rohrartigen, im Radialschnitt achtförmigen Teilgehäuse des einzigen Gehäuses eingespannt.

Im allgemeinen ist der Doppelschneckenförderer 28 totraumfrei im Stausystemkanal 26 gelagert. Wie in Fig. 7 gezeigt wird, kann der über der Austrittsöffnung 42 liegende Teil des Doppelschneckenförderers 28 an einem abriebfesten Material gelagert sein und eine Steigung aufweisen, die zu jenem Teil des Doppelschneckenförderers 28 im Stausystemkanal 26 gegenläufig ist. Allfälliges Material, welches sich im Stausystem 24 oberhalb der Austrittsöffnung 42 befindet, wird somit nach unten zur Austrittsöffnung 42 gefördert.

Teile eines in Verbindung mit Fig. 6 beschriebenen Rückführungskanals 46 sind ebenfalls gezeigt.

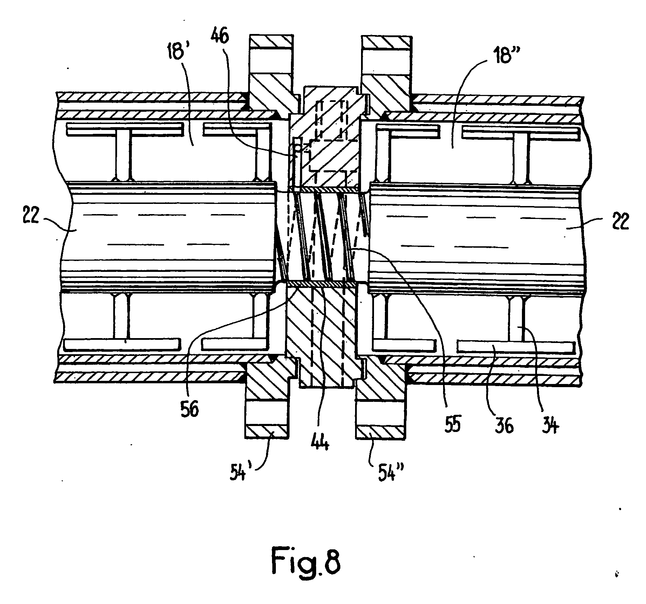

Wie Fig. 8 zeigt, ist im die Trennwand 16 durchgreifenden Bereich der Rotorwelle 22 ein Sperrgewinde 55 zum Abdichten der Prozessräume 18', 18" angebracht. Das an einer an der Trennwand 16 befestigten Hülse 56 anliegende Sperrgewinde 55 besteht aus zwei Abschnitten, in welchen je eine helikal verlaufende Nut ausgebildet ist, die eine zur Nut des anderen Abschnittes gegenläufige Steigung aufweist. Über die in Verbindung mit Fig. 6 beschriebenen Rückführungskanäle 46 wird Material aus dem Stausystem zum Sperrgewinde 55 geführt, welches beim Drehen der Rotorwelle 22 das Material kontinuierlich sowohl in den ersten Prozessraum 18' als auch in den zweiten Prozessraum 18" fördert. Das materialgefüllte Sperrgewinde 55 dient somit als Gleitlager und verhindert, dass Material entlang der rotierenden Rotorwelle 22 von einem der beiden Prozessräume 18', 18" in den anderen gelangen kann.

Bevorzugt ist die Trennwand 16 auf der Höhe der Achsen der Rotorwellen horizontal geteilt und wird zwischen die Ringflansche 54', 54" eingespannt und zentriert. Dies ermöglicht eine einfache Montage und Demontage der Trennwand 16 mit der durchgreifenden Rotorwelle 22. Zudem ist denkbar, dass die Rotorwelle 22 aus zwei Teilen ausgebildet ist, die im die Trennwand 16 durchgreifenden Bereich über ein Gewinde an den jeweiligen Endstummeln verschraubt werden können..

Ähnlich wie in Fig. 5 sind in dieser Ausführungsform an der Rotorwelle 22 Scheibenelemente 34 mit daran angebrachten Abreinigungselementen 36 angeordnet.

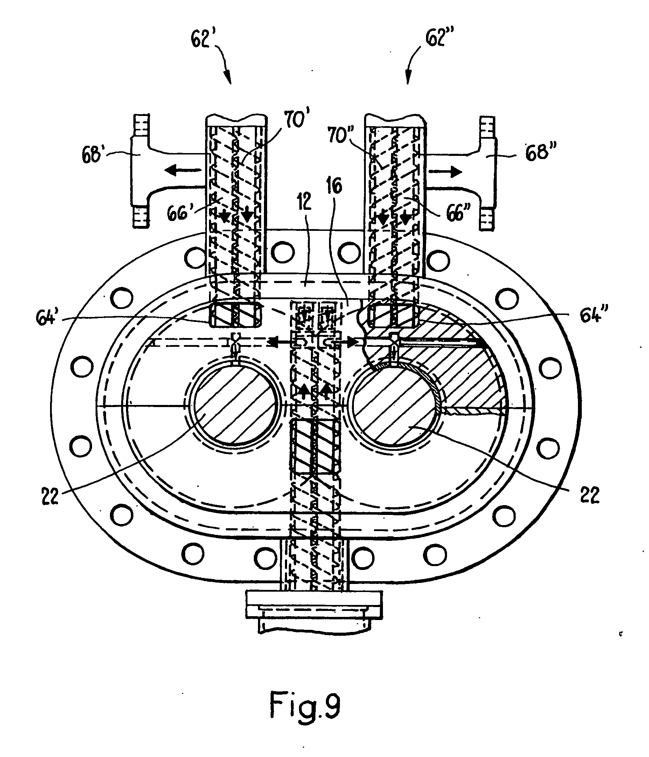

Die in Fig. 9 gezeigte Ausführungsform verfügt zusätzlich zu der in den Fig. 6, 7 und 8 gezeigten Ausführungsform über zwei teilweise gezeigte Brüdenaustragssysteme 62', 62", welche der Trennwand 16 zugeordnet sind. Die Brüdenaustragssysteme 62', 62" umfassen je eine Brüdeneintrittsöffnung 64', 64", einen Brüdenkanal 66', 66" und eine Brüdenaustrittsöffnung 68', 68". Die Brüdeneintrittsöffnungen 64', 64" sind im oberen Bereich der Trennwand 16 benachbart zum Mantel des Gehäuses 12 angeordnet. Sie sind weiter vertikal über den Achsen der Rotorwellen 22 angeordnet. Jeder Brüdenkanal 66', 66" verbindet die Brüdeneintrittsöffnung 64', 64" mit der Brüdenaustrittsöffnung 68', 68" und weist einen Doppelschneckenförderer 70', 70" auf. Die Brüden werden durch den auf die Dicke der Trennwand 16 abgestimmten Brüdenkanal 66', 66" abgezogen und gegebenenfalls über ein Rohrsystem zu einem der Übersichtlichkeit halber nicht gezeigten Brüdenkondensationssystem geleitet. Von den Brüden mitgerissenes Material im Brüdenkanal 66', 66" wird vom Doppelschneckenförderer 70', 70" in Richtung von der Brüdenaustrittsöffnung 68', 68" zur Brüdeneintrittsöffnung 64', 64" in den stromaufwärts liegenden Prozessraum zurückgeführt.

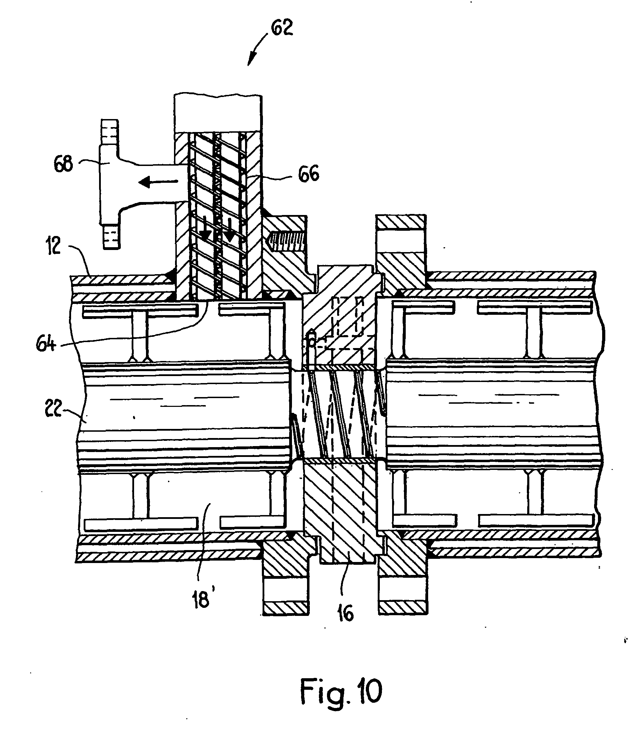

In der in Fig. 10 dargestellten Ausführungsform ist zusätzlich zu der in den Fig. 6, 7 und 8 gezeigten Ausführungsform dem ersten Prozessraum 18' ein Brüdenaustragssystem 62 zugeordnet. Dabei führt der auf das Volumen des ersten Prozessraumes 18' abgestimmte Brüdenkanal 66 durch den Mantel des Gehäuses 12 hindurch und verbindet die in den ersten Prozessraum 18' mündende Brüdeneintrittsöffnung 64 mit der Brüdenaustrittsöffnung 68. Das Abziehen der Brüden und das Rückführen des mitgerissenen Materials geschieht in analoger Weise wie in Fig. 9 beschrieben. Die Innenwand des Gehäuses 12 wird wie in Fig. 5 beschrieben abgereinigt. Die Rotorwelle 22 wird wie in Fig. 8 beschrieben in der Trennwand 16 gelagert.

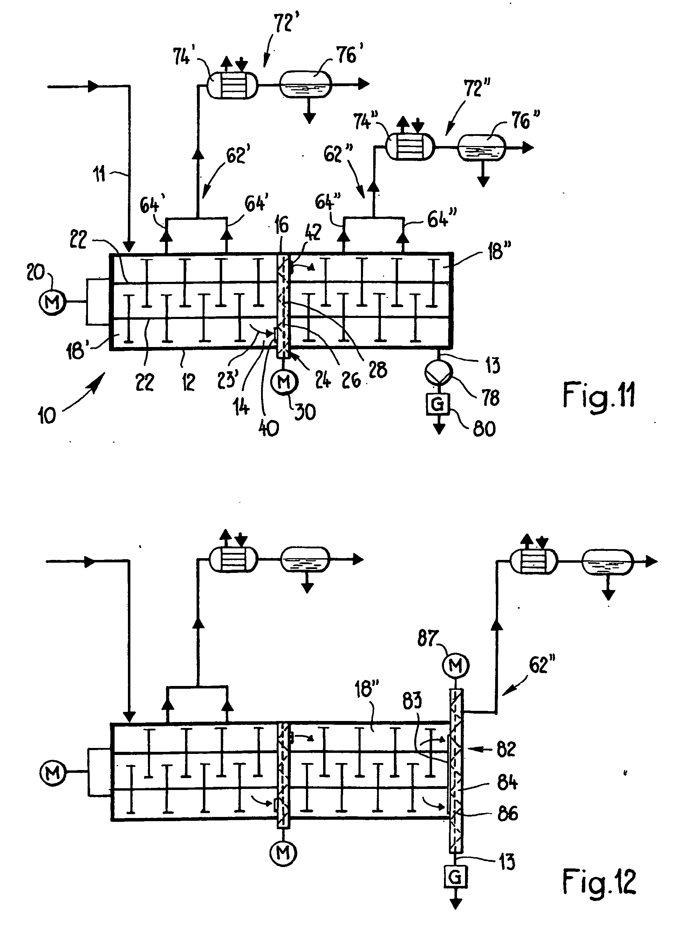

Der in Fig. 11 schematisch dargestellte grossvolumige Reaktor 10 umfasst ein Gehäuse 12, welches einen Innenraum 14 umschliesst, eine Materialzuführung 11 am einen Ende des Gehäuses 12 und einen Materialaustrag 13 am anderen Ende des Gehäuses 12. Im Innenraum 14 trennt eine Trennwand 16 zwei Prozessräume 18', 18" voneinander ab.

Zwei parallele, in einer horizontalen Ebene nebeneinander angeordnete Rotorwellen 22, die der Übersichtlichkeit halber übereinander dargestellt sind, durchgreifen die Trennwand 16 und sind an dieser gelagert. Mittels eines Rotorwellen-Antriebssystem 20 werden die Rotorwellen 22 angetrieben, die das zu behandelnde Material durch die beiden Prozessräume 18', 18" in Richtung von der Materialzuführung 11 zum Materialaustrag 13 fördern, wo es mittels einer Materialaustragspumpe 78 zu einem Granulator 80 gefördert wird.

Im Innern der Trennwand 16 ist ein Stausystem 24 mit einem Stausystemkanal 26 angeordnet. Das Stausystem 24 umfasst einen Doppelschneckenförderer 28, welcher von einem Doppelschneckenförderer-Antriebssystem 30 angetrieben ist. Wie mit Pfeil 23' angedeutet ist, tritt das Material am Stausystem 24 in die Eintrittsöffnung 40 ein und wird mit Hilfe des Doppelschneckenförderers 28 durch den Stausystemkanal 26 gefördert. Durch die Austrittsöffnung 42 gelangt das Material in den zweiten Prozessraum 18". Der Materialfüllgrad im ersten Prozessraum 18' wird derart eingestellt, dass die Eintrittsöffnung 40 des Stausystemkanals 26 während des Prozesses ununterbrochen mit Material abgedeckt ist, was gewährleistet, dass der Durchtritt von Gas vom ersten Prozessraum 18' in den zweiten Prozessraum 18" verhindert wird. Weiter ist denkbar, dass der Durchtritt von Gas vom ersten Prozessraum 18' in den zweiten Prozessraum 18" mit Hilfe eines Stauringes verhindert wird, der im Stausystemkanal 26 angeordnet ist. Dies ermöglicht eine zuverlässige Funktion selbst dann, wenn die Eintrittsöffnung 40 nicht vollständig mit Material abgedeckt ist.

Das Abziehen der Brüden aus dem grossvolumigen Reaktor 10 erfolgt mittels zweier Brüdenaustragssysteme 62', 62" mit je zwei Brüdeneintrittsöffnungen 64', 64''. Die Brüdenaustragssysteme 62', 62" sind je einem der beiden Prozessräume 18', 18" zugeordnet und mit je einem Brüdenkondensationssystem 72', 72" verbunden, welches je einen Kondensator 74 und einen Kondensatabscheider 76 umfasst, in dem die gasförmigen von den übrigen Komponenten abgeschieden werden.

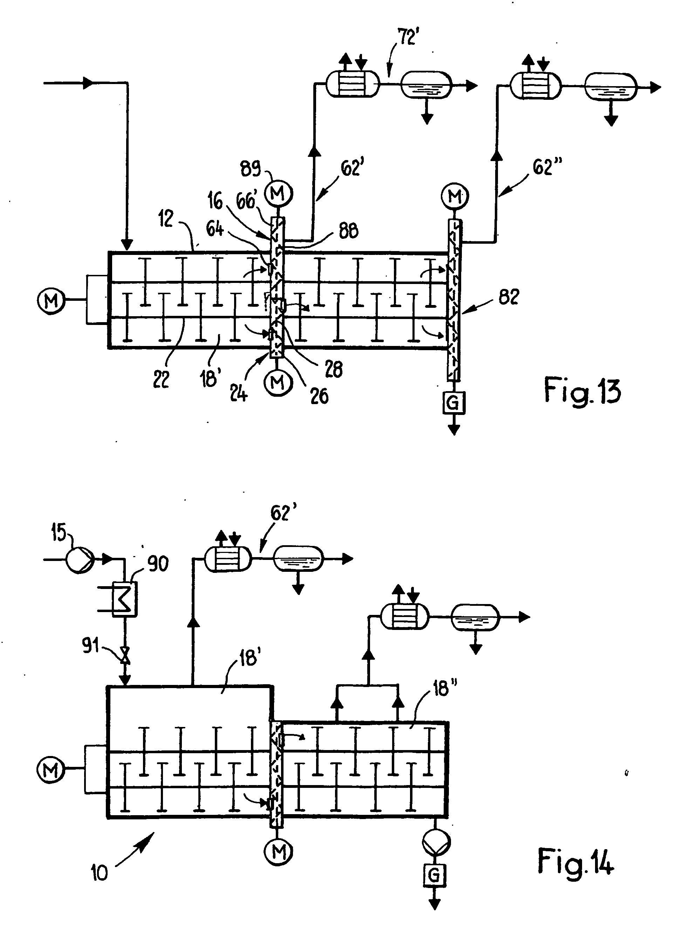

Der in Fig. 12 dargestellte grossvolumige Reaktor weist im Unterschied zu Fig. 11 anstelle einer Materialaustragspumpe ein Materialaustragssystem 82 auf, welches einen im wesentlichen rechtwinklig zur Längsachse der Rotorwellen 22 ausgerichteten Materialaustragskanal 84 mit einem darin angeordneten Doppelschneckenförderer 86 umfasst, der von einem Doppelschneckenförderer-Antriebssystem 87 angetrieben wird. Ein Brüdenaustragssystem 62" ist statt dem zweiten Prozessraum 18" dem Materialaustragssystem 82 zugeordnet.

Die im zweiten Prozessraum 18" anfallenden Brüden werden in dieser Ausführungsform nicht direkt aus dem zweiten Prozessraum 18" abgezogen, sondern gelangen wie das Material über eine entsprechende Eintrittsöffnung 83, welche sich annähernd über die gesamte Höhe des zweiten Prozessraumes 18" erstreckt, in den Materialaustragskanal 84 mit dem Doppelschneckenförderer 86. Der Doppelschneckenförderer 86 fördert das Material nach unten zum Materialaustrag 13, während die Brüden nach oben entweichen und über das dem Materialaustragssystem 82 zugeordnete Brüdenaustragssystem 62" abgezogen werden. Von den Brüden mitgerissenes Material wird ebenfalls vom Doppelschneckenförderer 82 nach unten zum Materialaustrag 13 geführt.

Im in Fig. 13 dargestellten grossvolumigen Reaktor sind im Unterschied zu Fig. 11 die zwei Brüdenaustragssysteme 62', 62" statt den Prozessräumen 18', 18", dem Stausystem 24 und dem Materialaustragssystem 82 zugeordnet.

Die im ersten Prozessraum 18' anfallenden Brüden werden in dieser Ausführungsform nicht durch die Wand des Gehäuses 12 aus dem ersten Prozessraum 18' abgezogen, sondern gelangen über eine Brüdeneintrittsöffnung 64 in der Trennwand 16 in einen teilweise in der Trennwand 16 angeordneten separaten Brüdenkanal 66'. Der in der Trennwand 16 angeordnete Teil des Brüdenkanals 66' verläuft in einer im wesentlichen rechtwinklig zur Längsachse der Rotorwellen 22 stehenden Ebene und umfasst einen Doppelschneckenförderer 88, welcher von einem eigenen Antriebssystem 89 angetrieben wird. Der Doppelschneckenförderer 88 fördert das gegebenenfalls mit den Brüden mitgerissene Material in zur Förderrichtung des Stausystems 24 umgekehrter Richtung. Die im ersten Prozessraum 18' anfallenden Brüden werden somit über den Brüdenkanal 66' einem Brüdenkondensationssystem 72' zugeführt, wobei mitgerissenes Material durch den Doppelschneckenförderer 88 im Brüdenkanal 66' in den ersten Prozessraum 18' zurückgeführt wird. Dadurch, dass der Doppelschneckenförderer 28 im Stausystemkanal 26 und der Doppelschneckenförderer 88 im Brüdenkanal 66' von je einem eigenen Antriebssystem angetrieben wird, können diese unabhängig voneinander betrieben werden.

Fig. 14 zeigt eine zu der in Fig. 11 gezeigten ähnliche Ausführungsform, wobei zusätzlich das Material vor dem Zuführen zum grossvolumigen Reaktor 10 mittels einer Pumpe 15 in einem Vorwärmer 90 gepumpt, unter Vordruck erhitzt und über ein Ventil 91 in den ersten Prozessraum 18' geführt wird, in dem ein wesentlich tieferer Druck vorliegt. Durch den raschen Druckabfall fällt durch spontane Entspannungsverdampfung ein grosses Volumen an Brüden an, welches mittels des dem ersten Prozessraum 18' zugeordneten Brüdenaustragssystems 62' abgezogen wird. Der erste Prozessraum 18' weist deshalb ein grösseres Volumen als der zweite Prozessraum 18" auf. Das relativ grosse Volumen des ersten Prozessraumes 18' erlaubt das Anfallen relativ grosser Brüdenmengen bei reduzierten Strömungsdruckverlusten und vermindertem Brüdenmitriss von Material.

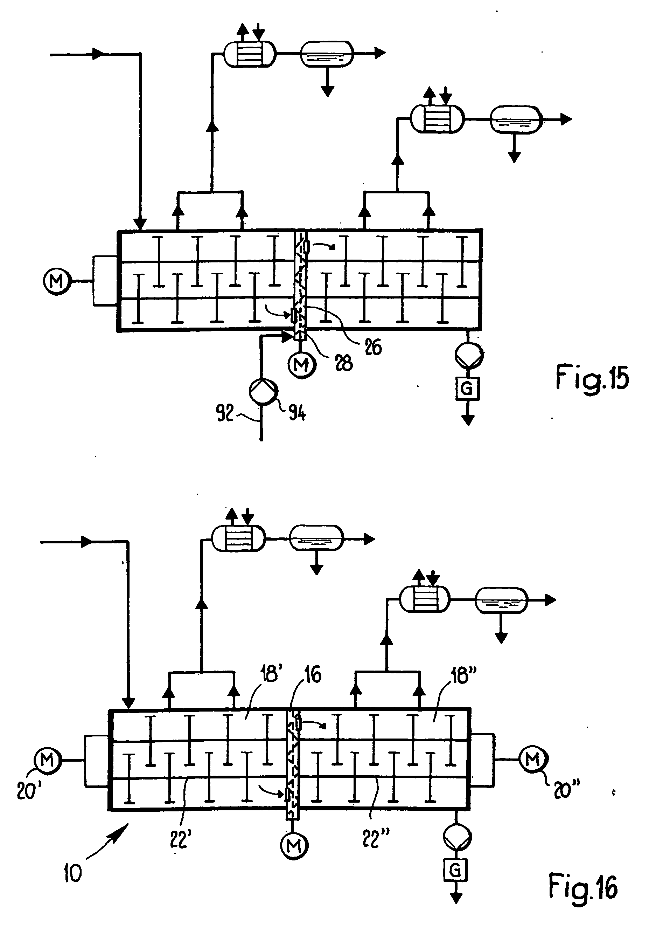

In Fig. 15 ist eine zu der in Fig. 11 gezeigten analoge Ausführungsform wiedergegeben, in der zusätzlich ein Zuführkanal 92 zum Zuführen eines Stoffes in den Stausystemkanal 26 führt. Mittels einer Dosierpumpe 94 wird eine weitere Komponente wie beispielsweise ein Katalysator, ein Regler, ein Stopper, ein Neutralisator oder ein Strippmedium zum Material im Stausystemkanal 26 hinzugefügt, durch den Doppelschneckenförderer 28 homogen eingemischt und dann dem zweiten Prozessraum 18" zugeleitet.

In dem in Fig. 16 wiedergegebenen grossvolumigen Reaktor 10 sind im Unterschied zu der in Fig. 11 gezeigten Ausführungsform im ersten Prozessraum 18' zwei parallele Rotorwellen 22' und im zweiten Prozessraum 18" zwei weitere parallele Rotorwellen 22" angeordnet und an der Trennwand 16 gelagert. Die Rotorwellen 22' im ersten Prozessraum 18' und die Rotorwellen 22" im zweiten Prozessraum 18" werden von je einem eigenen Antriebssystem 20', 20" angetrieben. Drehzahl und Drehsinn der beiden parallelen Rotorwellen 22' im ersten Prozessraum 18' können von den Rotorwellen 22" im zweiten Prozessraum 18" abweichen. Zudem ist denkbar, dass die Ausgestaltung der parallelen Rotorwellen 22' und deren Abstand voneinander im ersten Prozessraum 18' von den Rotorwellen 22" im zweiten Prozessraum 18" abweicht. Dies erlaubt, dass die Charakteristika der Rotorwellen optimal auf die Materialzusammensetzung und den Verfahrensschritt im jeweiligen Prozessraum abgestimmt werden können.

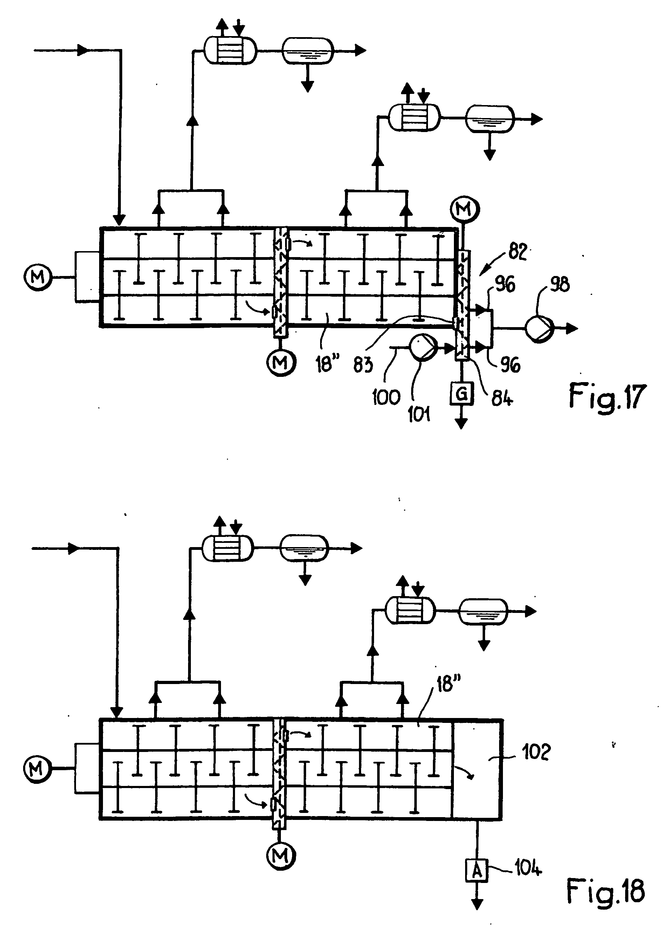

Fig. 17 zeigt eine Fig. 11 ähnliche Ausführungsform, in der zusätzlich restflüchtige Bestandteile in einem Materialaustragssystem 82 über zwei Restentgasungsöffnungen 96 im Materialaustragskanal 84 mit Hilfe einer Vakuumpumpe 98 abgezogen werden. Über einen in den Materialaustragskanal 84 mündenden Zuführkanal 100 können mittels einer Dosierpumpe 101 Zusatzkomponenten wie beispielsweise ein Strippmittel hinzugefügt werden. Die Eintrittsöffnung 83 des Materialaustragskanal 84 ist in dieser Ausführungsform benachbart zum Boden des zweiten Prozessraumes 18" angeordnet.

Fig. 18 zeigt einen grossvolumigen Reaktor ähnlich jenem in Fig. 11 mit zusätzlich einem nach dem zweiten Prozessraum 18" angeordneten Pulveraustragsraum 102. Diesem ist ein vakuum- oder überdruckabdichtendes Abschlussorgan 104 für den Feststoffaustrag wie beispielsweise eine Zellenradschleuse, eine Kolbenschleuse, ein Flachschieber oder Klappen zugeordnet. Ein solcher grossvolumiger Reaktor ist vorteilhaft für Prozesse, in denen das zu behandelnde Material einen Phasenumbruch von einer fliessfähigen Schmelze zu einem rieselfähigen Pulver oder Granulat durchläuft. Der Pulveraustragsraum 102 kann über ein höhenverstellbares Zentralwehr oder Seitenwehr zur Füllgradeinstellung verfügen. Das Abschlussorgan 104 verhindert einen Druckausgleich zwischen dem Pulveraustragsraum 102 und der Umgebung.

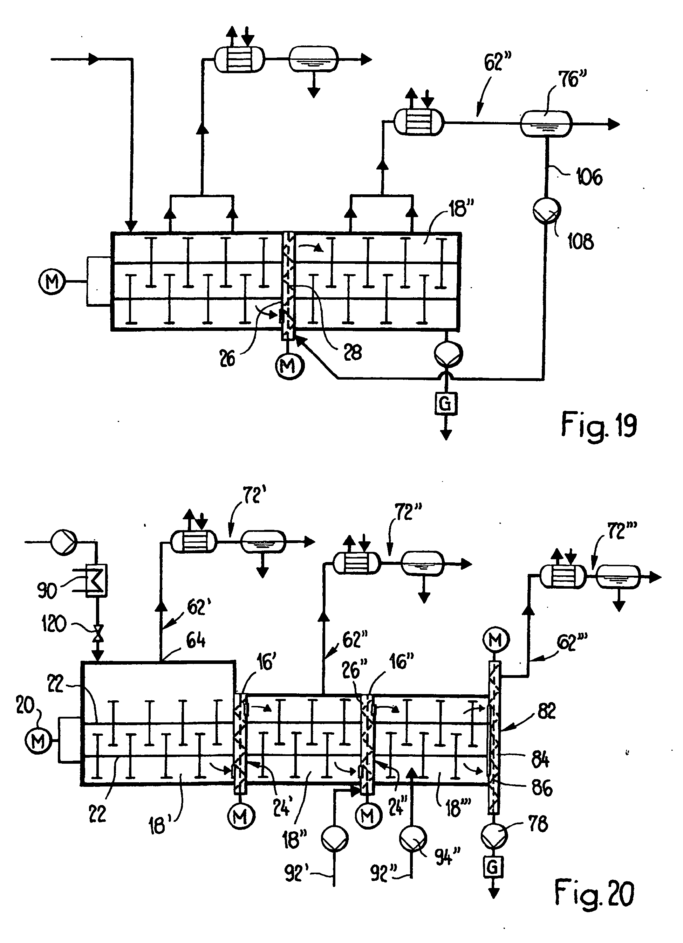

In der in Fig. 19 dargestellten Ausführungsform führt zusätzlich zu der in Fig. 11 gezeigten Ausführungsform aus dem Kondensatabscheider 76" des dem zweiten Prozessraum 18" zugeordneten Brüdenaustragssystems 62" ein Kondensatkanal 106 weg, welcher in den Stausystemkanal 26 führt. Mittels einer dem Kondensatkanal 106 zugeordneten Dosierpumpe 108 wird dabei das Kondensat zum Material im Stausystemkanal 26 hinzugefügt, durch den Doppelschneckenförderer 28 homogen eingemischt und dann dem zweiten Prozessraum 18" zugeleitet. Alternativ dazu kann das Kondensat auch an einer oder mehreren Stellen direkt in den zweiten Prozessraum 18" zudosiert werden. Durch Zuleiten des Kondensats in den zweiten Prozessraum 18" wird das Material durch Siedekühlung temperiert.

Fig. 20 zeigt eine Ausführungsform mit drei Prozessräumen 18', 18", 18"', die von zwei Trennwänden 16', 16" mit je einem darin angeordneten Stausystem 24', 24" abgetrennt werden. Wie in Fig. 11 ist den ersten zwei Prozessräumen 18', 18" je ein Brüdenaustragssystem 62', 62" zugeordnet und wie in Fig. 12 ist ein Brüdenaustragssystem 62''' dem Materialaustragssystem 82 zugeordnet. Zusätzlich führt zum zweiten Staussystemkanal 26' ein Zuführkanal 92' ähnlich wie in Fig. 15. Ein weiterer Zuführkanal 92" führt in den dritten Prozessraum 18"'. Wie in Fig. 14 weist der grossvolumige Reaktor einen ersten Prozessraum 18', der über ein grösseres Volumen als die übrigen Prozessräume 18", 18''' verfügt, und zusätzlich einen Vorwärmer 90 auf, dem ein Flash-Ventil 120 nachgeschaltet ist. Eine in diesem grossvolumigen Reaktor durchgeführte Konzentrierung eines Polymers wird unten im Detail beschrieben.

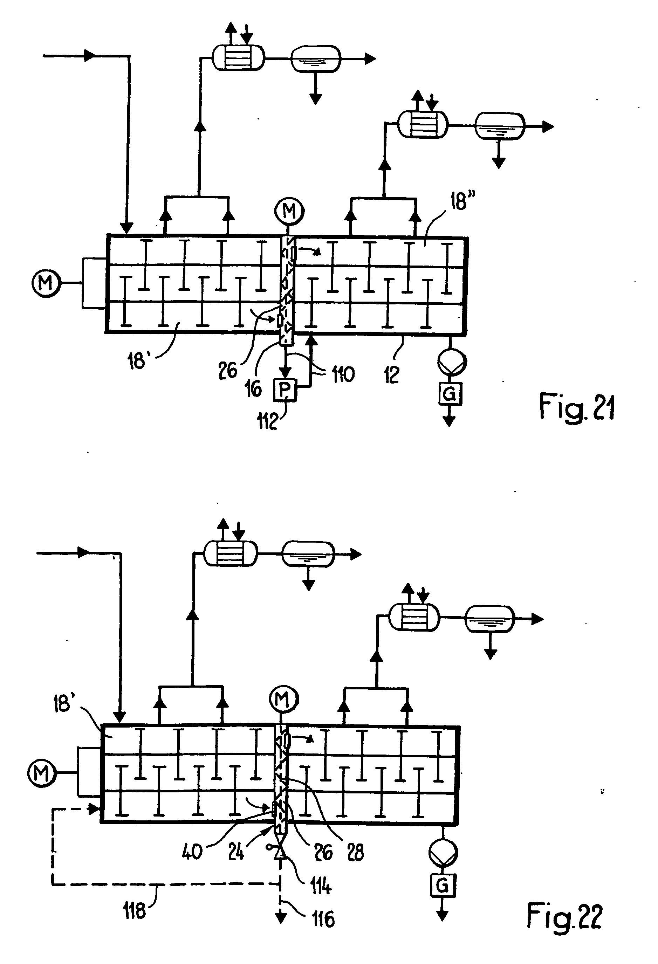

Fig. 21 zeigt eine zu jener in Fig. 11 analoge Ausführungsform, in der zusätzlich ein Teilstromkanal 110 vom Stausystemkanal 26 abzweigt und durch die Wand das Gehäuse 12 hindurch in einem der Trennwand 16 benachbarten Bereich in den zweiten Prozessraum 18" mündet. Aus dem ersten Prozessraum 18' wird somit ein Teil des Materials über den Stausystemkanal 26 und der übrige Teil über den Teilstromkanal 110 in den zweiten Prozessraum 18" geführt. Dabei ist dem Teilstromkanal 110 eine Vorrichtung 112 zur Prozesswertkontrolle oder zur Prozesswertregelung zugeordnet. Der Prozesswert kann beispielsweise über die Bestimmung der Produktviskosität, der Produktdichte oder der Farbzahl kontrolliert werden. Die Regelung des Prozesswertes erfolgt beispielsweise über Einstellen des Drucks, der Temperatur oder des Reaktionsfortschrittes im ersten Prozessraum 18'.

In der in Fig. 22 gezeigten Ausführungsform ist zusätzlich zu der in Fig. 11 gezeigten Ausführungsform dem Stausystem 24 ein Absperr- oder Regelventil 114 zugeordnet. Bei Umkehrung der Drehrichtung des Schneckenförderers 28 im Stausystemkanal 26 wird das Material von der Eintrittsöffnung 40 des Stausystemkanals 26 über das Absperr- oder Regelventil 114 in einen Entleerungskanal 116 geführt. Von diesem kann auf Wunsch das entleerte Material dem ersten Prozessraum 18' über einen Rezirkulationskanal 118 wieder zugeführt werden.

Anhand des in Fig. 20 gezeigten grossvolumigen Reaktors mit drei Prozessräumen 18', 18", 18''' wird die Konzentrierung und Restentgasung eines Styrol-Butadien-Styrol-Polymers im Detail beschrieben.

Ein Styrol-Butadien-Styrol-Polymer mit einer Lösungsmittelkonzentration von 65 bis 80 Gew.% wird im Vorwärmer 90 auf eine Temperatur von 150 bis 190°C erhitzt. Das Polymer wird über das Flash-Ventil 120 in den ersten Prozessraum 18' mit einer Temperatur von 150 bis 190°C und einem Absolutdruck von 150 bis 400 kPa geführt. Beim Eintritt der überhitzten Polymerlösung in den ersten Prozessraum 18' tritt eine spontane Entspannungsverdampfung ein, wobei ein Grossteil des abzutrennenden Lösungsmittels bzw. der flüchtigen Komponenten in die Brüdenphase übergeht. Der erste Prozessraum 18' verfügt über ein gegenüber den weiteren Prozessräumen 18" vergrössertes Volumen, was ermöglicht, dass die anfallenden grossen Brüdenmengen störungsfrei abgezogen werden können. Dem ersten Prozessraum 18' ist das Brüdenaustragssystem 62' mit einer Brüdeneintrittsöffnung 64 am Gehäuse 12 zugeordnet, durch die die Brüden abgezogen und einem ersten Brüdenkondensationssystem 72' zugeführt werden.

Durch das erste Stausystem 24' wird das vorkonzentrierte Material mit einer Lösungsmittelkonzentration von 5 bis 20 Gew.% und einer Temperatur von 120 bis 160°C aus dem ersten Prozessraum 18' in den zweiten Prozessraum 18" mit einer Temperatur von 140 bis 180°C und einem Druck von 10 bis 40 kPa geführt, wobei erneut eine Entspannungsverdampfung eintritt und die dabei anfallenden Brüden analog zum ersten Prozessraum 18' abgezogen und einem zweiten Brüdenkondensationssystem 72" zugeführt werden.

Durch das zweites Stausystem 24" wird das konzentrierte Material mit einer Lösungsmittelkonzentration von 0,1 bis 5 Gew.% und einer Temperatur von 140 bis 180°C aus dem zweiten Prozessraum 18" in den dritten Prozessraum 18"' mit einer Temperatur von 140 bis 190°C und einem Druck von 0,5 bis 2 kPa geführt, wobei erneut eine Entspannungsverdampfung eintritt. Diese wird von einem Schleppmittel wie beispielsweise Wasser, Wasserdampf oder Stickstoff unterstützt, welches mittels einer Dosierpumpe 94' zum Material im Stausystemkanal 26" hinzugefügt und homogen eingemischt worden ist. Die dabei anfallenden Brüden werden über das dem Materialaustragssystem 82 zugeordneten Brüdenaustragssystem 62''' abgezogen und einem dritten Brüdenkondensationssystem 72"' zugeführt. Diese Restentgasung kann durch eine weitere Einmischung von Schleppmittel über den Zuführkanal 92" mittels einer Dosierpumpe 94" in den dritten Prozessraum 18''' unterstützt werden. Das restentgaste Material mit einer Lösungsmittelkonzentration von 100 bis 2000 ppm und einer Temperatur von 140 bis 180°C wird aus dem dritten Prozessraum 18''' über einen Materialaustragskanal 84 mit einer darin angeordneten Doppelschnecke 86 ausgetragen und einer als Zahnradpumpe ausgestalteten Materialaustragspumpe 78 zugeführt, die den für die nachfolgende Granulierung im Granulator 80 nötigen Druck aufbaut.

Die vom Antriebssystem 20 angetriebenen Rotorwellen 22, die das Material in Richtung von der Materialzufuhr 11 zum Materialaustrag 13 fördern, können gleichsinnig oder gegensinnig drehen. Die Kinematik, die Geometrie, der Drehsinn und die Temperierung der Rotorwellen 22 kann in den einzelnen Prozessräumen 18', 18", 18"' je nach Prozessanforderungen unterschiedlich sein.

Die für die Verdampfung benötigte Wärmezufuhr in den einzelnen Prozessräumen 18', 18" , 18''' kann durch Wärmeleitung über die Wände des Gehäuses 12 oder über die Rotorwellen 22 sowie durch die bei der viskosen Scherung auftretenden Dissipation erfolgen.

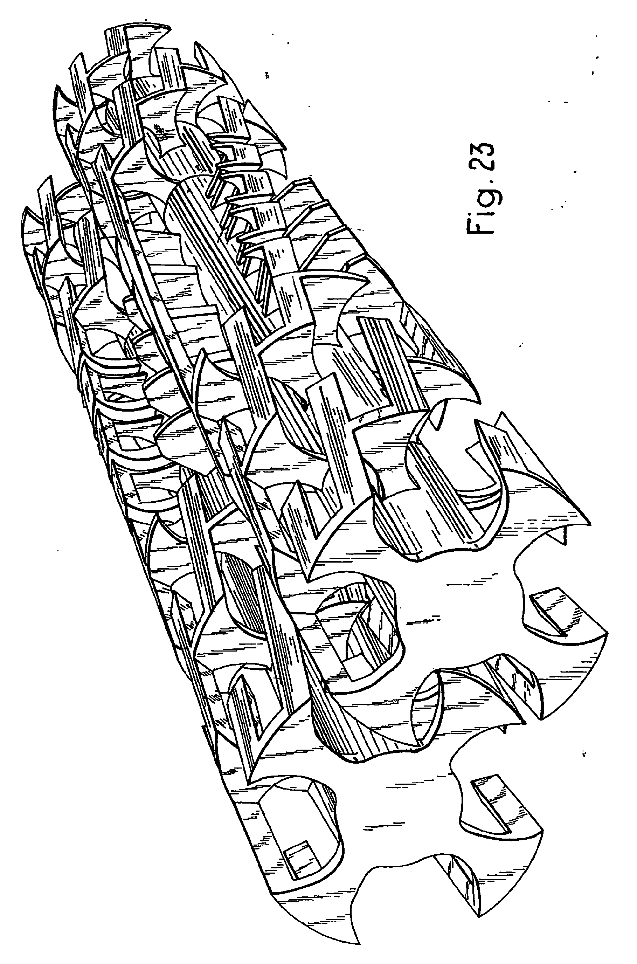

Die in den obigen Figuren dargestellten Rotorwellen 22 können beliebig ausgebildet sein. Denkbar sind beispielsweise Kombinationen der Rotorwelle, welche in der EP-A-1101525 offenbart wird, mit derjenigen, welche in der EP-B-715881 offenbart wird. So zeigt Fig. 23 in perspektivischer Ansicht eine Rotorwelle, die an ihren Endbereichen gemäss der EP-B-715881, und in ihrem mittleren Bereich gemäss der EP-A-1101525 ausgebildet ist.

## Patentansprüche

1. Reaktor (10) mit einem Volumen von 3 bis 50'000 Litern zur Behandlung von fliessfähigem Material mit einem einen Innenraum (14) umschliessenden Gehäuse (12), einer Materialzuführung (11) am einen Ende des Gehäuses (12) und einem Materialaustrag (13) am anderen Ende des Gehäuses (12), wobei im Innenraum (14) eine um ihre Achse drehend angetriebene Rotorwelle (22) angeordnet ist, die das Material in Richtung von der Materialzuführung (11) zum Materialaustrag (13) fördert, **dadurch gekennzeichnet, dass** eine Trennwand (16) im Innenraum zwei Prozessräume (18', 18") voneinander abtrennt und der Trennwand (16) ein Stausystem (24) mit einem Stausystemkanal (26) zugeordnet ist, wobei der Stausystemkanal (26) von einer in den ersten Prozessraum (18') mündenden Eintrittsöffnung (40) zu einer in den zweiten Prozessraum (18") mündenden Austrittsöffnung (42) führt, **dadurch gekennzeichnet, dass** das Stausystem eine aktiv betriebene Fördervorrichtung zur Förderung des Materials durch den Stausystemkanal umfasst und der Stausystemkanal (26) dazu bestimmt ist, das Material vom ersten Prozessraum (18') in den zweiten Prozessraum (18") zu leiten und gleichzeitig den Durchtritt von Gas zu verhindern.

2. Reaktor (10) nach Anspruch 1, **dadurch gekennzeichnet, dass** die Fördervorrichtung ein Schneckenförderer, ist.

3. Reaktor (10) nach Anspruch 2, **dadurch gekennzeichnet, dass** die Fördervorrichtung ein dichtkämmender Doppelschneckenförderer (28) ist.

4. Reaktor (10) nach Anspruch 2 oder 3, **dadurch gekennzeichnet, dass** die Fördervorrichtung drehzahlvariabel angetrieben ist.

5. Reaktor (10) nach einem der Ansprüche 1 bis 4, **dadurch gekennzeichnet, dass** das Stausystem (24) in der Trennwand (16) angeordnet ist, wobei der Stausystemkanal (26) in einer wenigstens annähernd rechtwinklig zur Längsachse der Rotorwelle (22) stehenden Ebene liegt und die Eintrittsöffnung (40) benachbart zum Boden des ersten Prozessraumes (18') und die Austrittsöffnung (42) bezüglich der Eintrittsöffnung (40) höher liegend angeordnet ist.

6. Reaktor (10) nach einem der Ansprüche 1 bis 5, **dadurch gekennzeichnet, dass** die Rotorwelle (22) die Trennwand (16) durchgreift, an dieser dichtend gelagert und in den zwei Prozessräumen (18', 18") wirksam ist.

7. Reaktor (10) nach einem der Ansprüche 1 bis 6, **dadurch gekennzeichnet, dass** in wenigstens einem der zwei Prozessräume (18', 18") zwei parallele Rotorwellen (22) angeordnet sind.

8. Reaktor (10) nach Anspruch 7, **dadurch gekennzeichnet, dass** zwei parallele Rotorwellen (22) die Trennwand (16) durchgreifen, an dieser dichtend gelagert und in den zwei Prozessräumen (18', 18") wirksam sind.

9. Reaktor (10) nach einem der Ansprüche 1 bis 5, **dadurch gekennzeichnet, dass** eine erste Rotorwelle (22') im ersten Prozessraum (18') angeordnet und an der Trennwand (16) gelagert ist, eine zweite Rotorwelle (22") im zweiten Prozessraum (18') angeordnet und an der Trennwand (16) gelagert, und beide Rotorwellen (22', 22") individuell angetrieben sind.

10. Reaktor (10) nach Anspruch 9, **dadurch gekennzeichnet, dass** mindestens in einem Prozessraum (18) zwei parallele Rotorwellen (22) angeordnet und an der Trennwand (16) gelagert sind.

11. Reaktor (10) nach einem der Ansprüche 1 bis 10, **dadurch gekennzeichnet, dass** das Stausystem (24) beheizt ist.

12. Reaktor (10) nach einem der Ansprüche 1 bis 11, **dadurch gekennzeichnet, dass** ein Teilstromkanal (110) zur Entnahme von Material vom Stausystemkanal (26) wegführt.

13. Reaktor (10) nach einem der Ansprüche 1 bis 12, **dadurch gekennzeichnet, dass** ein Zuführkanal (92) zum Zuführen eines Stoffes in den Stausystemkanal (26) führt.

14. Reaktor (10) nach einem der Ansprüche 1 bis 13, **dadurch gekennzeichnet, dass** der Trennwand (16) ein Brüdenaustragssystem (62') mit einem Brüdenkanal (66') zugeordnet ist, wobei der Brüdenkanal (66') eine in den ersten Prozessraum (18') mündende Brüdeneintrittsöffnung (64') in der Trennwand und eine mit einem Brüdenkondensationssystem (72*'*) verbundene Brüdenaustrittsöffnung (68') umfasst, und der Brüdenkanal (66') dazu bestimmt ist, Brüden vom ersten Prozessraum (18') dem Brüdenkondensationssystem (72') zuzuleiten.

15. Reaktor (10) nach einem der Ansprüche 1 bis 14, **dadurch gekennzeichnet, dass** der erste Prozessraum (18') ein grösseres Volumen aufweist als der zweite Prozessraum (18").

16. Reaktor (10) nach einem der Ansprüche 1 bis 15, **dadurch gekennzeichnet, dass** wenigstens ein Prozessraum (18) in der Mantelwand des Gehäuses (12) eine Brüdeneintrittsöffnung (64) aufweist.

17. Reaktor (10) nach einem der Ansprüche 1 bis 16, **dadurch gekennzeichnet, dass** die Oberfläche der Trennwand (16) plan ausgebildet und senkrecht zur Längsachse der Rotorwelle (22) angeordnet ist und die Rotorwelle (22) ein mit der Trennwand (16) zur Abreinigung zusammenwirkendes Reinigungselement aufweist.

18. Verwendung eines Reaktors (10) nach einem der Ansprüche 1 bis 17 zur Entgasung von Stoffsystemen.

19. Verwendung eines Reaktors (10) nach einem der Ansprüche 1 bis 17 zur Herstellung von Polymeren.

## Claims

1. Reactor (10) with a volume of 3 to 50,000 liters for treating free-flowing material, having a housing (12) surrounding an interior space (14), a material feed (11) at one end of the housing (12) and a material discharge (13) at the other end of the housing (12), a rotor shaft (22), which is driven in rotation about its axis and conveys the material in the direction from the material feed (11) to the material discharge (13), being arranged in the interior space (14), **characterized in that** a partition (16) in the interior space separates two process spaces (18*'*, 18'') from one another, and the partition (16) is assigned a build-up system (24) with a build-up system passage (26), the build-up system passage (26) leading from an inlet opening (40), which opens out into the first process space (18'), to an outlet opening (42) which opens out into the second process space (18"), **characterized in that** the build-up system comprises an actively operated conveyor device for conveying the material through the build-up system passage and the build-up passage system (26) is intended to pass the material from the first process space (18') into the second process space (18") and, at the same time, to prevent gas from passing through.

2. Reactor (10) according to Claim 1, **characterized in that** the conveyor device is a screw conveyor.

3. Reactor (10) according to Claim 2, **characterized in that** the conveyor device is a tightly meshing twinscrew conveyor (28).

4. Reactor (10) according to Claim 2 or 3, **characterized in that** the conveyor device is driven in such a manner that its rotational speed can be varied.

5. Reactor (10) according to one of Claims 1 to 4, **characterized in that** the build-up system (24) is arranged in the partition (16), the build-up system passage (26) lying in a plane which is at least approximately at right angles to the longitudinal axis of the rotor shaft (22), and the inlet opening (40) being arranged adjacent to the base of the first process space (18') and the outlet opening (42) being arranged at a higher level with respect to the inlet opening (40).

6. Reactor (10) according to one of Claims 1 to 5, **characterized in that** the rotor shaft (22) engages through the partition (16), is mounted in a sealing action at the partition and is active in the two process spaces (18', 18").

7. Reactor (10) according to one of Claims 1 to 6, **characterized in that** two parallel rotor shafts (22) are arranged in at least one of the two process spaces (18', 18'').

8. Reactor (10) according to Claim 7, **characterized in that** two parallel rotor shafts (22) engage through the partition (16), are mounted in sealing fashion at the partition and are active in the two process spaces (18' , 18").

9. Reactor (10) according to one of Claims 1 to 5, **characterized in that** a first rotor shaft (22') is arranged in the first process space (18') and is mounted at the partition (16), a second rotor shaft (22'') is arranged in the second process space (18') and is mounted at the partition (16), and both rotor shafts (22', 22'') are driven individually.

10. Reactor (10) according to Claim 9, **characterized in that** two parallel rotor shafts (22) are arranged at least in one process space (18) and are mounted at the partition (16) .

11. Reactor (10) according to one of Claims 1 to 10, **characterized in that** the build-up system (24) is heated.

12. Reactor (10) according to one of Claims 1 to 11, **characterized in that** a partial-stream passage (110) for the removal of material leads away from the build-up system passage (26).

13. Reactor (10) according to one of Claims 1 to 12, **characterized in that** a feed passage (92) for supplying a substance leads into the build-up system passage (26).

14. Reactor (10) according to one of Claims 1 to 13, **characterized in that** the partition (16) is assigned a vapor discharge system (62') with a vapor passage (66'), the vapor passage (66') comprising a vapor inlet opening (64'), which opens out into the first process space (18*'*), in the partition and a vapor outlet opening (68*'*), which is connected to a vapor condensation system (72'), and the vapor passage (66') is intended to pass vapors from the first process space (18') to the vapor condensation system (72').

15. Reactor (10) according to one of Claims 1 to 14, **characterized in that** the first process space (18') has a larger volume than the second process space (18").

16. Reactor (10) according to one of Claims 1 to 15, **characterized in that** at least one process space (18) has a vapor inlet opening (64) in the lateral wall of the housing (12).

17. Reactor (10) according to one of Claims 1 to 16, **characterized in that** the surface of the partition (16) is of planar design and is arranged perpendicular to the longitudinal axis of the rotor shaft (22), and the rotor shaft (22) has a cleaning element which interacts with the partition (16) for cleaning purposes.

18. Use of a reactor (10) according to one of Claims 1 to 17 for degassing materials systems.

19. Use of a reactor (10) according to one of Claims 1 to 17 for the production of polymers.

## Revendications

1. Réacteur (10) présentant un volume de 3 à 50.000 litres destiné au traitement de matière apte à l'écoulement, comportant une cage (12) renfermant une chambre intérieure (14), une amenée de matière (11) à une extrémité de la cage (12) et une évacuation de matière (13) à l'autre extrémité de la cage (12), un arbre de rotor (22) entraîné de façon à tourner autour de son axe, lequel transporte la matière depuis l'amenée de matière (11) en direction de l'évacuation de matière (13), étant disposé dans la chambre intérieure (14), **caractérisé en ce qu'**une paroi de séparation (16) sépare deux chambres de traitement (18', 18'') l'une de l'autre dans la chambre intérieure et **en ce qu'**un système de retenue (24) comportant un canal (26) de système de retenue est associé à la paroi de séparation (16), le canal (26) du système de retenue conduisant depuis une ouverture d'entrée (40) débouchant dans la première chambre de traitement (18') jusqu'à une ouverture de sortie (42) débouchant dans la seconde chambre de traitement (18"), **caractérisé en ce que** le système de retenue comporte un dispositif de transport entraîné activement pour transporter la matière à travers le canal du système de retenue et **en ce que** le canal (26) du système de retenue est destiné à amener la matière de la première chambre de traitement (18') dans la seconde chambre de traitement (18'') et à empêcher en même temps le passage de gaz.

2. Réacteur (10) selon la revendication 1, **caractérisé en ce que** le dispositif de transport est une vis sans fin transporteuse.

3. Réacteur (10) selon la revendication 2, **caractérisé en ce que** le dispositif de transport est une double vis sans fin transporteuse (28) engrenée de façon étanche.

4. Réacteur (10) selon la revendication 2 ou 3, **caractérisé en ce que** le dispositif de transport est entraîné à vitesse de rotation variable.

5. Réacteur (10) selon l'une quelconque des revendications 1 à 4, **caractérisé en ce que** le système de retenue (24) est disposé dans la paroi de séparation (16), le canal (26) du système de retenue se trouvant dans un plan situé au moins à peu près à angle droit par rapport à l'axe longitudinal de l'arbre de rotor (22), l'ouverture d'entrée (40) étant disposée de façon voisine du fond de la première chambre de traitement (18') et l'ouverture de sortie (42) étant disposée plus haut par rapport à l'ouverture d'entrée (40).

6. Réacteur (10) selon l'une quelconque des revendications 1 à 5, **caractérisé en ce que** l'arbre de rotor (22) traverse la paroi de séparation (16), est logé de façon étanche sur celle-ci et est actif dans les deux chambres de traitement (18', 18'').

7. Réacteur (10) selon l'une quelconque des revendications 1 à 6, **caractérisé en ce que** deux arbres de rotor (22) parallèles sont disposés dans au moins l'une des deux chambres de traitement (18', 18").

8. Réacteur (10) selon la revendication 7, **caractérisé en ce que** deux arbres de rotor (22) parallèles traversent la paroi de séparation (16), sont logés de façon étanche sur celle-ci et sont actifs dans les deux chambres de traitement (18', 18'').

9. Réacteur (10) selon l'une quelconque des revendications 1 à 5, **caractérisé en ce qu'**un premier arbre de rotor (22') est disposé dans la première chambre de traitement (18') et logé sur la paroi de séparation (16) et un second arbre de rotor (22") est disposé dans la seconde chambre de traitement (18'') et logé sur la paroi de séparation (16) et **en ce que** les deux arbres de rotor (22', 22") sont entraînés individuellement.

10. Réacteur (10) selon la revendication 9, **caractérisé en ce que** deux arbres de rotor (22) parallèles sont disposés au moins dans une chambre de traitement (18) et logés sur la paroi de séparation (16).

11. Réacteur (10) selon l'une quelconque des revendications 1 à 10, **caractérisé en ce que** le système de retenue (24) est chauffé.

12. Réacteur (10) selon l'une quelconque des revendications 1 à 11, **caractérisé en ce qu'**un canal d'écoulement partiel (110) destiné au prélèvement de matière part du canal (26) du système de retenue.

13. Réacteur (10) selon l'une quelconque des revendications 1 à 12, **caractérisé en ce qu'**un canal d'amenée (92) destiné à amener une substance conduit dans le canal (26) du système de retenue.

14. Réacteur (10) selon l'une quelconque des revendications 1 à 13, **caractérisé en ce qu'**un système d'extraction de vapeurs (62') comportant un canal de vapeurs (66') est associé à la paroi de séparation (16), le canal de vapeurs (66') comportant une ouverture d'entrée de vapeurs (64') dans la paroi de séparation débouchant dans la première chambre de traitement (18') et une ouverture de sortie de vapeurs (68') reliée à un système de condensation de vapeurs (72'), et **en ce que** le canal de vapeurs (66') est destiné à amener des vapeurs de la première chambre de traitement (18') dans le système de condensation de vapeurs (72').

15. Réacteur (10) selon l'une quelconque des revendications 1 à 14, **caractérisé en ce que** la première chambre de traitement (18') présente un volume plus grand que celui de la seconde chambre de traitement (18") .

16. Réacteur (10) selon l'une quelconque des revendications 1 à 15, **caractérisé en ce qu'**au moins une chambre de traitement (18) présente une ouverture d'entrée de vapeurs (64) dans la paroi d'enveloppe de la cage (12).

17. Réacteur (10) selon l'une quelconque des revendications 1 à 16, **caractérisé en ce que** la surface de la paroi de séparation (16) est conformée de façon plane et est disposée perpendiculairement à l'axe longitudinal de l'arbre de rotor (22) et **en ce que** l'arbre de rotor (22) présente un élément de nettoyage coopérant avec la paroi de séparation (16) destiné à nettoyer celle-ci.

18. Utilisation d'un réacteur (10) selon l'une quelconque des revendications 1 à 17 pour le dégazage de systèmes de matières.

19. Utilisation d'un réacteur (10) selon l'une quelconque des revendications 1 à 17 pour la production de polymères.
